# EUROPÄISCHE PATENTSCHRIFT

(11) **EP 3 000 644 B1**
(45) Veröffentlichungstag und Bekanntmachung des Hinweises auf die Patenterteilung: **03.06.2020**
(21) Anmeldenummer: 15185210.0
(22) Anmeldetag: 15.09.2015
(51) Int. Cl.: B60M 1/23, B60L 5/04, B60L 5/36, B60M 1/12

(54) **TRANSPORTSYSTEM MIT EINEM ÜBER EINE OBERLEITUNGSANLAGE MIT ELEKTRISCHER ENERGIE VERSORGBAREN, NICHT SCHIENENGEBUNDENEN FAHRZEUG**
TRANSPORT SYSTEM WITH A VEHICLE WHICH CAN BE FED FROM AN OVERHEAD ELECTRIC INSTALLATION AND IS NOT RAIL-BOUND
SYSTEME DE TRANSPORT DOTE D'UN VEHICULE NON RELIE PAR RAILS, POUVANT ETRE ALIMENTE EN ENERGIE ELECTRIQUE PAR UNE INSTALLATION DE CATENAIRES

(30) Priorität: 25.09.2014 DE 102014219466
(43) Veröffentlichungstag der Anmeldung: 30.03.2016
(73) Patentinhaber: Siemens Mobility GmbH, 81739 München (DE)
(72) Erfinder: Gräbner, Oliver, 85579 Neubiberg (DE); Bühs, Florian, 10777 Berlin (DE); Francke, Jürgen, 12524 Berlin (DE); Gerstenberg, Frank, 10409 Berlin (DE); Keil, Göran, 12557 Berlin (DE)

(56) Entgegenhaltungen:
- DE-A1-102011 076 620
- DE-A1-102012 210 519
- DE-A1-102012 213 460
- DE-T5-112012 004 019
- FR-A1- 2 540 801
- JP-A- 2005 094 952
- US-A- 4 070 584

## Beschreibung

Die Erfindung betrifft ein Transportsystem nach dem Oberbegriff des Patentanspruches 1.

Ein derartiges Transportsystem umfasst mindestens ein nicht schienengebundenes, elektrisch oder hybridelektrisch getriebenes Fahrzeug, insbesondere einen dieselelektrisch getriebenen Lastkraftwagen. Es umfasst ferner eine wenigstens abschnittsweise entlang einer Fahrspur des Fahrzeugs angeordnete, zweipolige Oberleitungsanlage zur Bereitstellung elektrischer Energie. Das Fahrzeug weist dabei einen Stromabnehmer zur Einspeisung und/oder Rückspeisung elektrischer Energie durch Schleifkontakt zu den als Hin- und Rückleiter ausgebildeten Fahrdrähten der Oberleitungsanlage auf. Das Transportsystem umfasst außerdem einen fahrzeugseitig angeordneten Videodetektor zur Ermittlung einer Relativlage der Fahrdrähte relativ zum Fahrzeug.

Ein solches Transportsystem ist beispielsweise aus der Offenlegungsschrift DE 10 2011 076 623 A1 bekannt. Das nicht schienengebundene Fahrzeug weist einen Stromabnehmer zur Einspeisung elektrischer Energie aus einer zweipoligen Oberleitung auf, deren als Hin- und Rückleiter ausgebildete Fahrdrähte jeweils durch mindestens eine Schleifleiste des Stromabnehmers kontaktierbar sind. Der Stromabnehmer weist auch zwei Tragausleger auf, die jeweils am Fahrzeug und an einer die Schleifleisten tragenden Wippe derart kipp- und schwenkbar angelenkt sind, dass die Wippe sowohl anheb- und absenkbar als auch quer zur Fahrtrichtung bewegbar ist. Eine Ist-Lage des Fahrzeugs relativ zu den Fahrdrähten wird mittels eines Lagesensors erfasst, der als fahrzeugfeste Videokamera ausgebildet ist. Das Fahrzeug weist eine Regeleinrichtung auf, die aus einem Vergleich der erfassten Ist-Lage mit einer vorgegebenen Soll-Lage des Fahrzeugs relativ zu den Fahrdrähten eine Stellgröße bestimmt. Die Regeleinrichtung steuert entsprechend der bestimmten Stellgröße einen Stellantrieb zur seitlichen Nachführung einer die Schleifleisten tragende Wippe an. Die Ist-Lage beruht auf der automatisierten Erkennbarkeit der Fahrdrähte auf den aufgenommenen Videobildern, beispielsweise durch deren Vergleich mit Referenzbildern. Der Vergleich mit Referenzbildern erfordert den Aufwand, dass vorab für jeden Ort der Fahrstrecke ein Referenzbild aufgenommen wird und einem Fahrzeug für die Fahrt auf dieser Fahrstrecke zur Verfügung gestellt wird, da in Fahrspurbögen oder bei einem Zickzackverlauf der Oberleitung die Fahrdrähte nicht parallel zur Fahrspurmitte verlaufen. Außerdem beruht der Vergleich mit Referenzbildern auf während der Fahrt aufgenommenen Videobildern, auf welchen die Fahrdrähte eindeutig erkannt werden können. Dies ist aber bei schlechten Sichtbedingungen, wie etwa bei Dunkelheit, bei Nebel oder bei Niederschlag, stark beeinträchtigt bis unmöglich. Außerdem müssen das Objektiv der Videokamera und auch die Fahrdrähte möglichst frei von Schmutz sein, was praktisch kaum erreichbar ist.

Ein vergleichbares Transportsystem ist aus der Offenlegungsschrift DE 10 2012 205 276 A1 bekannt, wobei dort als Lagesensor ein Laserscanner vorgeschlagen wird, der die Position der Fahrdrähte mittels Laserstrahlung abtastet. Neben den hohen Anschaffungskosten ist an einem Laserscanner nachteilig, dass er bewegliche Teile aufweist, die unter den rauen Einsatzbedingungen auf der Straße im Freien in Mitleidenschaft gezogen werden können. Außerdem ist der Laserscanner auf Höhe der Stoßstange zu befestigen, um eine ausreichende Strahlauffächerung bis zu den abzutastenden Fahrdrähten zu erreichen, was in unerwünschter Weise die Fahrzeuglänge vergrößert. Schließlich wird die Positionsbestimmung bei Regen erheblich gestört.

Aus der Offenlegungsschrift DE 10 2010 053 528 A1 ist ein System für das automatische An- und Abdrahten während der Fahrt eines Oberleitungsfahrzeugs bekannt. Auf dem Dach eines Oberleitungsbusses sind zwei stereooptische Videokameras angebracht, aus deren Bilddaten Positionen der beiden Fahrdrähte und der Kontaktschuhe von Stangenstromabnehmern relativ zum Fahrzeug ermittelt werden. Anhand der ermittelten Relativpositionen werden Fangseilmotoren zum Stellen der Stangenstromabnehmer derart angesteuert, dass deren Kontaktschuhe bedarfsgerecht dicht unter die gegebenenfalls vorhandene Oberleitung positioniert werden, um einen elektrischen Kontakt herzustellen. Wird keine Fahrleitung erkannt, erfolgt auch kein Andrahten beziehungsweise es wird automatisch entdrahtet. Im abgedrahteten Zustand bezieht das Fahrzeug seine Energie aus einem Speicher und/oder aus einem zusätzlichen Verbrennungsmotor. Für die sichere Funktion bei Dunkelheit sind Infrarot-Leuchtdioden vorgesehen.

Die Patentanmeldung FR 2 540 801 A1 offenbart einen Oberleitungsbus mit einer Steuervorrichtung für einen Stromabnehmer, der einen anheb- und absenkbaren sowie zum seitlichen Verschwenken seines Schleifstückes drehbaren Ausleger aufweist. Seitlich des auf dem Dach des Oberleitungsbusses angeordneten Drehgelenks des Auslegers ist eine punktförmige Lichtquelle angeordnet, die einen sich auf einem Kegelmantel drehenden Lichtstrahl emittiert. Sie umfasst ferner einen linearen Retroreflektor, der auf gleicher Höhe wie die Oberleitung angeordnet ist und parallel zu dieser im gleichen Abstand verläuft, wie die Lichtquelle vom Drehgelenk des Stromabnehmers beabstandet ist. Ein vom Retroreflektor reflektierter Lichtstrahl wird mittels einer lichtempfindlichen Zelle detektiert. Aus der Drehposition des Lichtstrahls im Detektionsfall kann die Position der Oberleitung relativ zum Fahrzeug beziehungsweise zum Stromabnehmer bestimmt werden und die Steuervorrichtung derart angesteuert werden, dass der Stromabnehmer den Kontakt zur Oberleitung nicht verliert.

Die Patentanmeldung GB 2 244 581 A zeigt ein System zum Auslesen von Strichkodezeichen aus einem fahrenden Fahrzeug heraus, um dessen aktuelle Position zu bestimmen. Hierzu werden im Fahrzeug seitlich, auf je eine Fahrbahnseite ausgerichtete Videokameras mit einem digitalen Videobildverarbeitungssystem mitgeführt. Die Strichkodes sind an bekannten Orten entlang der Fahrtroute, beispielsweise an beiden Fahrbahnseiten angebracht, wobei die Strichkodes horizontal ausgerichtet sind, um eine ausreichende Lesezeit zu gewährleisten. Um eine Videobildaufnahme auszulösen, wenn das Fahrzeug in die Nähe der Strichkodezeichen kommt, wird entweder ein streckenseitig ausgesandter Lichtstrahl von einem fahrzeugseitigen Sensor empfangen oder dessen Empfang durch einen streckenseitigen Sensor vom herannahenden Fahrzeug nach Art einer Lichtschranke unterbrochen. Die Strichkodes können direkt Positionsinformationen, wie Entfernungen in Metern, oder Referenzinformationen zu Karten enthalten, die dann dem Fahrer auf einem Bildschirm einschließlich möglicher Routenoptionen angezeigt werden.

Die deutsche Veröffentlichung DE 11 2012 004 019 T5 offenbart einen elektrisch angetriebenen Kipplastwagen vom Serien-Hybridtyp für Minen, der neben dem von einem Motor angetriebenen Generator einen Stromabnehmer zur Energieeinspeisung aus einem Fahrdrahtsystem aufweist, um ein Abfallen der Fahrgeschwindigkeit in Anstiegsabschnitten zu vermeiden. Das Fahrdrahtsystem weist einen Abschnitt mit einem ersten Fahrdraht, einen sich daran anschließenden Abschnitt mit einem zweiten Fahrdraht und einen Verbindungsabschnitt auf, in welchen ein zweiter Fahrdraht beginnt und ein erster Fahrdraht endet. Der Kipplastwagen umfasst eine als Kamera ausgebildete und auf dem Fahrzeugdach monierte Fahrdraht-Detektions-vorrichtung, mittels der der erste und zweite Fahrdraht detektierbar und dessen Lage und Ausrichtung relativ zum Kipplastwagen ermittelbar ist. Der Kipplastwagen umfasst eine Steuervorrichtung, welche in Abhängigkeit der ermittelten Relativlage und -ausrichtung des Fahrdrahtes ein Fahrzeug-Giermoment erzeugt, so dass das Fahrzeug dem Fahrdraht folgt und in einem Verbindungsabschnitt kein Giermoment erzeugt.

Ferner ist aus der Offenlegungsschrift DE 10 2012 210 519 A1 ein Fahrzeug mit einer durch einen Fahrer bedienbaren und elektronsich gesteuerten Fahrzeugeinrichtung bekannt. Die Fahrzeugeinrichtung ist als Stromabnehmer mit stellbaren Schleifleisten ausgebildet, welche zur Einspeisung elektrischer Energie während der Fahrt mit einer Fahrleitungsanlage in Schleifkontakt bringbar ist. Die Fahrzeugeinrichtung weist Sensormittel zur Erfassung einer Höhen- und/oder Seitenlage der Schleifleisten relativ zur Fahrleitung auf.

Der Erfindung liegt die Aufgabe zugrunde, ein Transportsystem der eingangs genannten Art bereitzustellen, welches eine gegenüber dem Stand der Technik verbesserte Erkennung der Lage des Fahrzeugs relativ zur Oberleitung aufweist.

Die Aufgabe wird gelöst durch ein gattungsgemäßes Transportsystem mit den im kennzeichnenden Teil des Patentanspruches 1 angegebenen Merkmalen. Demnach umfasst das Transportsystem wenigstens ein nicht schienengebundenes, elektrisch oder hybridelektrisch angetriebenes Fahrzeug, insbesondere ein dieselelektrisch getriebenes Fahrzeug. Ferner umfasst das Transportsystem eine wenigstens abschnittsweise entlang einer Fahrspur des Fahrzeugs angeordnete, zweipolige Oberleitungsanlage zur Bereitstellung elektrischer Energie. Dabei weist das Fahrzeug einen Stromabnehmer zur Einspeisung elektrischer Energie durch Schleifkontakt zu den als Hin- und Rückleiter ausgebildeten Fahrdrähten der Oberleitungsanlage auf. Außerdem umfasst das Transportsystem einen fahrzeugseitig angeordneten Videodetektor zur Ermittlung einer Relativlage der Fahrdrähte relativ zum Fahrzeug. Erfindungsgemäß weist die Oberleitungsanlage die Lage der Fahrdrähte markierende Markierungselemente auf. Die Markierungselemente sind an seitlich der Fahrspur angeordneten Masten der Oberleitungsanlage befestigt. Weiterhin ist der Videodetektor zur Aufnahme von Videobildern der Markierungselemente ausgerichtet und der Videodetektor zur Messung seiner Entfernung zu einem Markierungselement ausgebildet. Des Weiteren ist eine dem Videodetektor zugeordnete Auswertungseinheit dazu ausgebildet, aus einem aufgenommenen Videobild zu erkennen, ob Fahrdrähte oberhalb des Fahrzeugs vorhanden sind, und bei Vorhandensein von Fahrdrähten deren Relativlage zum Fahrzeug zu ermitteln. Zur indirekten Ermittlung der Lage der Fahrdrähte werden passive Markierungselemente eingesetzt, die auf einem digitalen Videobild auch bei schlechten Wetterverhältnissen besser als die Fahrdrähte selbst erkennbar sind. Der Einsatz passiver Markierungselemente hält den Wartungsaufwand gering. Es werden außerdem die im Vergleich zu Laserscannern günstigeren und robusteren Videodetektoren eingesetzt. Die Relativlage der Fahrdrähte wird mittels der Auswertungseinheit aus den aufgenommenen Videobilddaten berechnet. Dabei werden Position und Ausrichtung des Videodetektors auf dem Fahrzeug berücksichtigt. Die Entfernungsmessung kann durch Triangulation oder durch Einsatz einer Laufzeitkamera erfolgen. Diese Ausgestaltung ermöglicht eine indirekte Bestimmung der Relativlage aus dem gemessenen Abstand zwischen Fahrzeug und Mast und der festen Relativlage der Fahrdrähte zu den Masten. Alternativ wäre die Befestigung der Markierungselemente an einem Schild mit definierter Ortsposition und definierter Relativlage zu den Fahrdrähten möglich. Die Auswertungseinheit bestimmt, ob überhaupt eine Oberleitung und ob die richtige Oberleitung - nicht etwa die für Trolleybusse oder Straßenbahnen vorgesehene - vorhanden ist, erst dann darf Stromabnehmer entriegelt und angehoben werden, um Kollisionen mit Schilderbrücken, Brücken, Lichtsignalanlagen, und dergleichen Infrastruktureinrichtungen, oder um ein seitliches Einhaken der Wippe in den Fahrdraht zu vermeiden. Ist der Stromabnehmer sicher angebügelt, dient die Relativlagebestimmung dem seitlichen Nachführen des Stromabnehmers, um Fahrmanöver quer zur Fahrtrichtung des Fahrzeugs auszugleichen. Hierdurch kann innerhalb vorgebbarer Fahrtoleranzen der Schleifkontakt des Stromabnehmers zur Oberleitung aufrecht erhalten werden und bei Überschreiten eines Schwellwertes für den seitlichen Versatz der Stromabnehmer sicher abgebügelt werden. Zur Lageerkennung können also die Fahrdrahtanzahl, der Fahrdrahtabstand, die Fahrdrahthöhe und der Fahrdrahtversatz zur Fahrzeuglängsmitte aus den Videobilddaten berechnet werden.

Vorzugsweise ist der Videodetektor als Stereokamera und/oder als Laufzeitkamera ausgebildet. Eine Stereokamera weist zumeist zwei nebeneinander angebrachte Objektive auf und ermöglicht die gleichzeitige Aufnahme der für 3D-Bilder erforderlichen stereoskopischen Halbbilder. Die Belichtungssteuerung und Schärfeneinstellung beider Objektive sind gekoppelt. Darüber hinaus kann die Stereokamera als Laufzeitkamera ausgebildet sein, die die aufzunehmende Szene mittels eines Lichtpulses ausgeleuchtet. Die Laufzeitkamera misst für jeden Bildpunkt die Zeit, die das Licht bis zum Objekt und wieder zurück braucht. Die benötigte Zeit ist direkt proportional zur Distanz. Die Laufzeitkamera liefert somit für jeden Bildpunkt die Entfernung des darauf abgebildeten Objektes. Das Prinzip entspricht dem eines Laserscanners mit dem Vorteil, dass eine ganze Szene auf einmal aufgenommen wird und nicht abgetastet werden muss.

In einer vorteilhaften Ausführungsform des erfindungsgemäßen Transportsystems ist der Videodetektor innerhalb einer Fahrerkabine des Fahrzeugs angeordnet und eine Erfassungsachse des Videodetektors in Fahrtrichtung des Fahrzeugs oder in einem spitzen Winkel zu dieser ausgerichtet. Bei Anordnung innerhalb der Fahrerkabine ist der Videodetektor gut vor äußeren Verschmutzungs- und Witterungseinflüssen sowie vor mechanischen Beschädigungen geschützt. Scheibenwischer und Scheibenwaschanlagen ermöglichen eine gute Sicht durch die Scheiben nach außen und damit die Aufnahme gut auswertbare Videobilder. Außerdem wird durch die Anordnung des Videodetektors in der Fahrerkabine die Montage eines Lagesensors im Bereich der vorderen Stoßstange vermieden, was bei maximaler Fahrzeuglänge nicht auf Kosten der Ladefläche geht. Durch die Ausrichtung des Videodetektors unter einem flachen Winkel zur Fahrtrichtung werden Videobilder von Positionen aufgenommen, die das Fahrzeug je nach Fahrgeschwindigkeit mehr oder weniger zeitverzögert erreicht. Während dieser Zeit kann die Regeleinrichtung aus der erfassten Relativlage die aktuell erforderliche Stellgröße ermittelt und der Stellantrieb den Stromabnehmer entsprechend nachführen.

In einer bevorzugten Ausgestaltung des erfindungsgemäßen Transportsystems weist der Videodetektor eine Belichtungseinheit auf, die zur Aussendung von Infrarotlicht in Richtung der Erfassungsachse ausgebildet ist. Hierdurch können Sonnen- und Nebeleinflüsse eliminiert werden, wobei der Einsatz von Infrarot-Sperrfiltern am Videodetektor zweckmäßig ist.

In einer vorteilhaften Ausgestaltung des erfindungsgemäßen Transportsystems weisen die Markierungselemente jeweils eine retroreflektierende Reflexionsfläche für einfallendes Licht auf. Eine solche an sich bekannte Reflexionsfläche reflektiert einfallendes Licht im Wesentlichen entgegen die Einfallsrichtung zurück, so dass die Sichtbarkeit des Markierungselements weitgehend unabhängig von der Lage der Lichtquelle ist. Bei Dunkelheit kann sogar das vom Fahrzeug ausgesandte Scheinwerferlicht als Lichtquelle dienen.

Vorzugsweise sind die Markierungselemente aus Kunststoff oder Leichtmetall gefertigt. Durch die Wahl eines leichten Materials wird das Kettenwerk der Oberleitungsanlage mit möglichst wenig Zusatzlast beaufschlagt. Neben Kunststoffen kommt hier beispielsweise Aluminium in Betracht.

In einer weiteren vorteilhaften Ausführungsform des erfindungsgemäßen Transportsystems sind die Markierungselemente auf einer geringeren Höhe als der Videodetektor angeordnet und die Erfassungsachse des Videodetektors gegenüber der Horizontalen nach unten geneigt. Dies stellt einen Blendschutz bei tiefstehender Sonne in Richtung der Erfassungsachse, insbesondere in Fahrtrichtung, dar.

Vorzugsweise ist die Erfassungsachse des Videodetektors quer zur Fahrtrichtung ausgerichtet. Diese Ausrichtung vermindert Funktionsdefizite der Auswertungseinheit durch schlechte Wetterbedingungen und bei Sonneneinstrahlung in Fahrtrichtung. Ist der Videodetektor außerhalb der Fahrerkabine angeordnet, so vermindert seine Ausrichtung quer zur Fahrtrichtung die Verschmutzung des Objektivs.

In einer weiteren bevorzugten Ausgestaltung des erfindungsgemäßen Transportsystems weisen die Markierungselemente jeweils eine optisch auslesbare Kodierungsfläche für Ortsinformationen auf und die Auswertungseinheit ist dazu ausgebildet, aus einem aufgenommenen Videobild einen durch die Kodierungsfläche dargestellten Informationskode auszulesen. Über die Kodierungsfläche lassen sich neben der Lagebeziehung zwischen dem Markierungselement und den Fahrdrähten beliebige weitere Informationen bereitstellen, die durch Auslesen des Informationskodes abfragbar sind.

Vorzugsweise ist die Auswertungseinheit dazu ausgebildet, die Ortsinformationen mittels des ausgelesenen Informationskodes aus einer fahrzeugseitigen oder einer fahrzeugexternen Datenbank abzufragen. Eine fahrzeugexterne Datenbank kann beispielsweise über eine drahtlose Kommunikationseinrichtung im Fahrzeug abgefragt werden. Verfügt das Fahrzeug über eine Empfangseinheit für Positionssignale eines Satelliten gestützten Navigationssystems, so kann die Fahrdrahtlage mittels der aktuellen Fahrzeugposition sogar noch genauer bestimmt werden.

Vorzugsweise umfassen die Ortsinformationen eine laufende Mastnummer und/oder geografische Mastkoordinaten und/oder Hinweise zur Fahrstrecke. Eine Mastnummer oder direkt dessen Ortskoordinaten stellen Hinweise dar, die zur Navigationsunterstützung herangezogen werden können. Hinweise zur Fahrstrecke können beispielsweise Gefahrenhinweise, etwa Glatteis, Gegenstände oder Öl auf der Fahrbahn oder aber Unfall- oder Staumeldungen, oder auch die Ankündigung einer Kurvenstrecke oder eines Oberleitungsendes sein.

Weitere Eigenschaften und Vorteile der Erfindung ergeben sich aus nachfolgender Beschreibung von Ausführungsbeispielen anhand der Zeichnungen, in deren
- FIG 1: eine Seitenansicht einer Oberleitungsanlage des erfindungsgemäßen Transportsystems,
- FIG 2: eine Draufsicht der Oberleitungsanlage nach FIG 1,
- FIG 3: eine Seitenansicht einer Hängerverbindung der Oberleitungsanlage nach FIG 1,
- FIG 4: eine Vorderansicht der Hängerverbindung nach FIG 3,
- FIG 5: ein Ausführungsbeispiel eines Markierungselements des erfindungsgemäßen Transportsystems in Seitenansicht,
- FIG 6: eine Draufsicht des erfindungsgemäßen Transportsystems mit Markierungselementen nach FIG 5 und
- FIG 7: eine Vorderansicht eines Videodetektors des Transportsystems nach FIG 6
schematisch veranschaulicht sind.

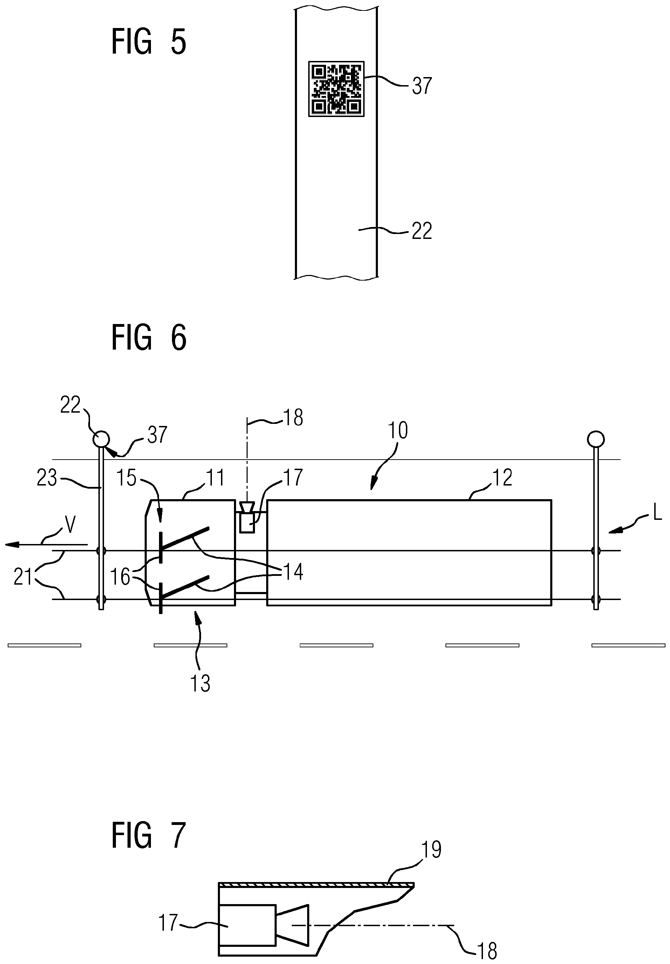

Ein erfindungsgemäßes Transportsystem umfasst gemäß FIG 6 ein nicht schienengebundenes, elektrisch oder hybridelektrisch angetriebenes Fahrzeug 10. Das als dieselelektrisch getriebener Lastkraftwagen ausgebildete Fahrzeug 10 weist eine Fahrerkabine 11, einen dahinter angeordneten Ladeaufbau 12 und einen zwischen diesen abgestützten Stromabnehmer 13 zur Einspeisung elektrischer Energie aus einer zweipoligen Oberleitungsanlage 20 des Transportsystems auf.

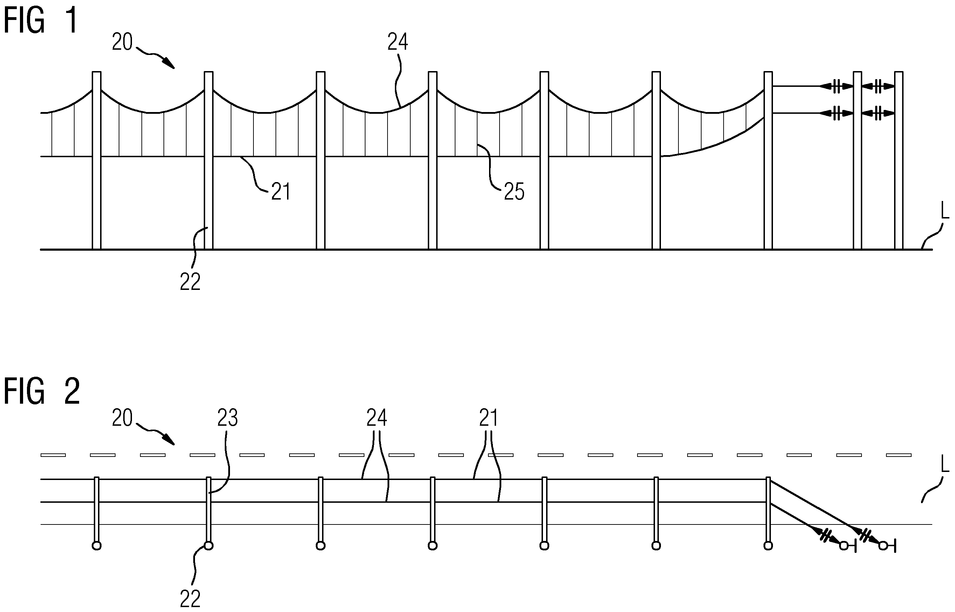

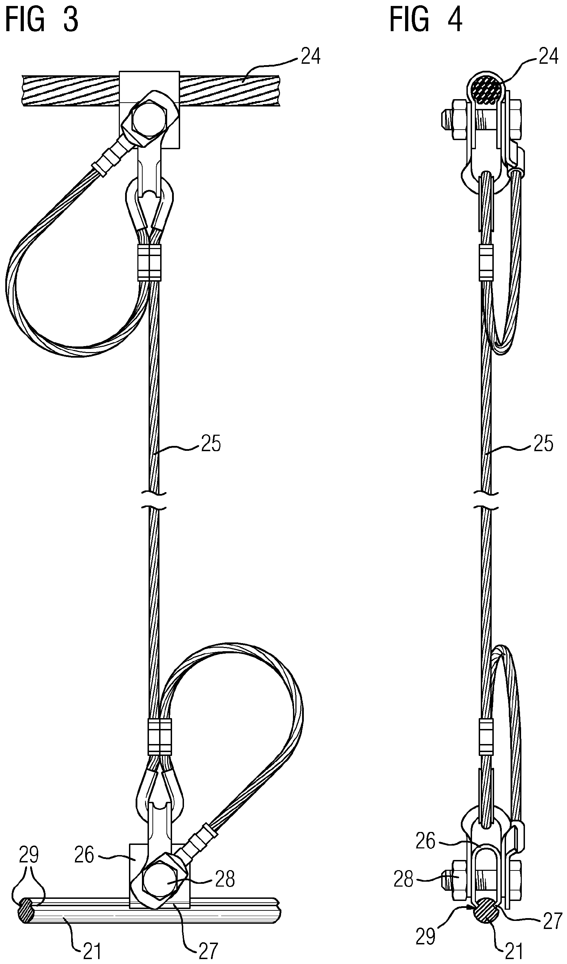

Gemäß FIG 1 bis FIG 3 weist die Oberleitungsanlage 20 als Hin- und Rückleiter ausgebildete Fahrdrähte 21 auf, die über einer Fahrspur L des Fahrzeugs 10, etwa über der rechten Fahrspur einer mehrspurigen Autobahn, parallel zueinander verlaufen. Hierzu weist die Oberleitungsanlage 20 seitlich der Fahrspur L aufgestellte Masten 22 auf, von welchen Ausleger 23 seitlich über die Fahrspur L ragen. Über der Fahrspur L verlaufen ferner zwei Tragseile 24, die von den Auslegern 23 gestützt werden und zwischen diesen kettenlinienförmig durchhängen. An jedem Tragseil 24 hängt je ein Fahrdraht 21 über eine Vielzahl an Hängerseilen 25, deren Längen mit zunehmender Entfernung von den Auslegern abnehmen, damit eine annähernd konstante Fahrdrahthöhe über der Fahrspur L eingestellt werden kann. Ein Hängerseil 25 wird an einem Fahrdraht 21 mittels einer Hängerklemme 26 befestigt, deren Klemmkanten 27 mittels einer Schraubverbindung 28 in je einer von zwei Längsrillen 29 des Fahrdrahtes 21 formschlüssig in Eingriff gehalten werden. Diese Art der Befestigung stellt sicher, dass die Hängerklemmen 26 keine Hindernisse beim Beschleifen der Fahrdrähte 21 durch den Stromabnehmer 13 des Fahrzeugs 10 darstellen. An den Enden der Längsleiter 21 und 24 wird das Kettenwerk durch nicht näher bezeichnete Nachspanneinrichtungen abgespannt.

Der Stromabnehmer 13 weist zwei Tragarme 14 auf, die eine Wippenanordnung 15 mit Schleifleisten 16 tragen. Die Tragarme 14 sind fahrzeugseitig um horizontale Achsen drehbar gelagert, wodurch die Wippenanordnung 15 mittels einer nicht dargestellten Hubeinrichtung zwischen einer unteren Ruheposition, in der der Stromabnehmer 13 über der Fahrerkabine 11 abgelegt ist, und einer oberen Arbeitsposition, in der die Schleifleisten 16 die Fahrdrähte 21 kontaktieren, anheb- und absenkbar ist. Ferner sind die Tragarme 14 fahrzeugseitig um vertikale Achsen drehbar gelagert, wodurch die Wippenanordnung 15 mittels nicht dargestellter Stellantriebe seitlich, also quer zu einer Fahrtrichtung V des Fahrzeugs 10, verschwenkbar ist. Hierdurch ist es möglich, die Wippenanordnung 15 bei seitlichen Fahrungenauigkeiten innerhalb der Fahrspur L derart nachzustellen, dass die Schleifleisten 16 den Schleifkontakt zu den Fahrdrähten 21 und damit die Energieeinspeisung aufrechterhalten. Hierzu ist eine nicht dargestellte Regeleinrichtung vorgesehen, die mit einem fahrzeugseitig angeordneten Videodetektor 17 zur Ermittlung einer seitlichen Relativlage der Fahrdrähte 21 relativ zum Fahrzeug 10 verbunden ist. Die Regeleinrichtung weist eine nicht dargestellte Steuereinheit auf, die aus der ermittelten Relativlage und der aktuellen Stellung der Wippenanordnung 15 eine Stellgröße für die Stellantriebe derart berechnet, dass die Schleifleisten 16 innerhalb ihres Arbeitsbereiches die Fahrdrähte 21 kontaktieren. Daher ist die Steuereinheit mit den Stellantrieben verbunden, um an diese ein der berechneten Stellgröße entsprechendes Steuersignal zu übertragen. Die Stellantriebe Verschwenken die Wippenanordnung 15 durch Drehung der Tragarme 14 um deren vertikale Achsen.

Diese seitliche Nachführung des Stromabnehmers 13 erfordert eine verlässliche Ermittlung der Relativlage des Fahrzeugs 10 zu den Fahrdrähten 21. Es ist daher erfindungsgemäß vorgesehen, dass die Oberleitungsanlage 20 die Lage der Fahrdrähte 21 markierende Markierungselemente aufweist. Der Videodetektor 17 ist hierfür zur Aufnahme von Videobildern der Markierungselemente ausgerichtet. Dem Videodetektor 17 ist eine nicht dargestellte Auswertungseinheit zugeordnet, die dazu ausgebildet ist, aus einem aufgenommenen Videobild zu erkennen, ob Fahrdrähte 21 oberhalb des Fahrzeugs 10 vorhanden sind, und bei Vorhandensein von Fahrdrähten 21 deren Relativlage zum Fahrzeug 10 zu ermitteln. Die Auswertungseinheit kann beispielsweise im Videodetektor 17 integriert sein. Der Videodetektor 17 kann als Stereokamera zur Aufnahme von 3D-Bildern oder als Laufzeitkamera zur Abstandsmessung zwischen Videodetektor 17 und einem Markierungselement ausgebildet sein. Der Videodetektor 17 kann eine nicht dargestellte Belichtungseinheit aufweisen, die zur Aussendung von Infrarotlicht in Richtung einer Erfassungsachse 18 des Videodetektors 17 ausgebildet ist.

In einem Ausführungsbeispiel des erfindungsgemäßen Transportsystems gemäß FIG 5 bis FIG 7 sind die Markierungselemente auf der Fahrspur L zugewandten Seiten von Masten 22 der Oberleitungsanlage 20 befestigt. Dabei ist der Videodetektor 17 bei Passage eines Mastes 22 zur Messung seiner Entfernung zum Markierungselement ausgebildet. Die Markierungselemente sind vorzugsweise auf einer geringeren Höhe am Mast 22 angeordnet als der Videodetektor 17 auf dem Fahrzeug 10. Dadurch kann die Erfassungsachse 18 des Videodetektors 17 gegenüber der Horizontalen nach unten geneigt werden, was vor blendendem Licht bei tief stehender Sonne schützt. Die Erfassungsachse 18 des hier zwischen Fahrerkabine 11 und Ladeaufbau 12 angeordneten Videodetektors 17 ist quer zur Fahrtrichtung V ausgerichtet, wodurch Beeinträchtigungen der Entfernungsmessungen und der Bildaufnahmen durch Regen vermindert werden. Ist der Videodetektor 17 außerhalb der Fahrerkabine 11 angeordnet, ist um diesen gemäß FIG 11 ein schutenartiger Witterungsschutz 19 angeordnet. Die Markierungselemente weisen jeweils eine optisch auslesbare Kodierungsfläche 37 für Ortsinformationen auf, beispielsweise in Form eines so genannten zweidimensionalen Quick-Response-Codes. Die Auswertungseinheit ist dazu ausgebildet, aus einem aufgenommenen Videobild einen durch die Kodierungsfläche 37 dargestellten Informationskode auszulesen. Mittels des ausgelesenen Informationskodes fragt die Auswertungseinheit die Ortsinformation aus einer fahrzeugseitigen Datenbank oder über drahtlose Kommunikationsmittel aus einer fahrzeugexternen Datenbank ab. Die Ortsinformationen können eine laufende Mastnummer und/ oder geografische Mastkoordinaten umfassen, die es der Auswertungseinheit ermöglicht, in Kombination mit der gemessenen Mastentfernung auf die Relativlage der Fahrdrähte 21 zum Fahrzeug 10 zu schließen. Zusätzlich können die Ortsinformationen Hinweise zur Fahrstrecke umfassen, etwa aktuelle Gefahrenhinweise wie Glatteis, Öl oder Hindernisse, Verkehrsstörungen oder Kurven auf dem bevorstehenden Streckenabschnitt, die einem Fahrer des Fahrzeugs 10 über eine akustisehe und/oder visuelle Ausgabeschnittstelle bereitgestellt werden können.

Im Ausführungsbeispiel wird anhand der auf den aufgenommenen Videobildern gut erkennbaren Markierungselemente direkt oder indirekt ermittelt, ob überhaupt ein Fahrdraht 21 im Umfeld des Fahrzeugs 10 vorhanden ist, ob die richtige Anzahl an Fahrdrähten 21 vorhanden ist, welchen Abstand diese zueinander und von der Oberfläche der Fahrspur L haben, und welchen seitlichen Versatz diese von einer Fahrspurlängsmitte haben. Daraus kann - gegebenenfalls mit Zusatzinformationen über Mastpositionen und Entfernungen zum Mast - die Auswertungseinheit die aktuelle Relativlage des Fahrzeugs 10 zu den Fahrdrähten 21 berechnen. Hierbei ist auch bei schlechten Wetterverhältnissen die Verwendung günstiger Stereo- oder Laufzeitkameras als Videodetektoren 17 möglich. Die mit der Auswertungseinheit gekoppelte Steuereinrichtung des Stromabnehmers 13 steuert die Hubeinrichtung zum Anheben der Wippenanordnung 15 an, wenn die Auswertungseinheit das Vorhandensein der richtigen Oberleitung festgestellt hat. Sie steuert die Stellantriebe zum seitlichen Verschwenken der Wippenanordnung 15 an, wenn die Auswertungseinheit eine Relativlage zwischen Fahrzeug 10 und Fahrdrähten 21 festgestellt hat, die zu einem drohenden Kontaktverlust der Schleifleisten 16 zu den Fahrdrähten führen könnte. Ist der drohende Kontaktverlust nicht mehr durch ein seitliches Nachführen des Stromabnehmers 13 vermeidbar, so steuert die Steuereinrichtung die Hubeinrichtung zum Absenken der Wippenanordnung 15 an.

## Patentansprüche

1. Transportsystem, mit einem nicht schienengebundenen, elektrisch oder hybridelektrisch getriebenen Fahrzeug (10), mit einer wenigstens abschnittsweise entlang einer Fahrspur (L) des Fahrzeugs (10) angeordneten, zweipoligen Oberleitungsanlage (20) zur Bereitstellung elektrischer Energie, wobei das Fahrzeug (10) einen Stromabnehmer (13) zur Einspeisung elektrischer Energie durch Schleifkontakt zu den als Hin- und Rückleiter ausgebildeten Fahrdrähten (21) der Oberleitungsanlage (20) aufweist, und mit einem fahrzeugseitig angeordneten Videodetektor (17) zur Ermittlung einer Relativlage der Fahrdrähte (21) relativ zum Fahrzeug (10), **dadurch gekennzeichnet, dass** die Oberleitungsanlage (20) die Lage der Fahrdrähte (21) markierende Markierungselemente aufweist, wobei die Markierungselemente an seitlich der Fahrspur (L) angeordneten Masten (22) der Oberleitungsanlage (20) befestigt sind, dass der Videodetektor (17) zur Aufnahme von Videobildern der Markierungselemente ausgerichtet und der Videodetektor (17) zur Messung seiner Entfernung zu einem Markierungselement ausgebildet ist, und dass eine dem Videodetektor (17) zugeordnete Auswertungseinheit dazu ausgebildet ist, aus einem aufgenommenen Videobild zu erkennen, ob Fahrdrähte (21) oberhalb des Fahrzeugs (10) vorhanden sind, und bei Vorhandensein von Fahrdrähten (21) deren Relativlage zum Fahrzeug (10) zu ermitteln.

2. Transportsystem nach Anspruch 1, wobei der Videodetektor (17) als Stereokamera und/oder als Laufzeitkamera ausgebildet ist.

3. Transportsystem nach Anspruch 1 oder 2, wobei der Videodetektor (17) innerhalb einer Fahrerkabine (11) des Fahrzeugs (10) angeordnet ist und eine Erfassungsachse (18) des Videodetektors (17) in Fahrtrichtung (V) des Fahrzeugs (10) oder in einem spitzen Winkel zu dieser ausgerichtet ist.

4. Transportsystem nach einem der Ansprüche 1 bis 3, wobei der Videodetektor (17) eine Belichtungseinheit aufweist, die zur Aussendung von Infrarotlicht in Richtung der Erfassungsachse (18) ausgebildet ist.

5. Transportsystem nach einem der Ansprüche 1 bis 4, wobei die Markierungselemente jeweils eine retroreflektierende Reflexionsfläche (32) für einfallendes Licht aufweisen.

6. Transportsystem nach einem der Ansprüche 1 bis 5, wobei die Markierungselemente aus Kunststoff oder Leichtmetall gefertigt sind.

7. Transportsystem nach einem der Ansprüche 1 bis 6, wobei die Markierungselemente auf einer geringeren Höhe als der Videodetektor (17) angeordnet sind und die Erfassungsachse (18) des Videodetektors (17) gegenüber der Horizontalen nach unten geneigt ist.

8. Transportsystem nach Anspruch 1 oder 2 oder nach einem der Ansprüche 1 bis 7, soweit letztere nicht auf Anspruch 3 zurückbezogen sind, wobei die Erfassungsachse (18) des Videodetektors (17) quer zur Fahrtrichtung ausgerichtet ist.

9. Transportsystem nach einem der Ansprüche 1 bis 8, wobei die Markierungselemente jeweils eine optisch auslesbare Kodierungsfläche (37) für Ortsinformationen aufweisen und die Auswertungseinheit dazu ausgebildet ist, aus einem aufgenommenen Videobild einen durch die Kodierungsfläche (37) dargestellten Informationskode auszulesen.

10. Transportsystem nach Anspruch 9, wobei die Auswertungseinheit dazu ausgebildet ist, die Ortsinformationen mittels des ausgelesenen Informationskodes aus einer fahrzeugseitigen oder einer fahrzeugexternen Datenbank abzufragen.

11. Transportsystem nach Anspruch 9 oder 10, wobei die Ortsinformationen eine laufende Mastnummer und/oder geografische Mastkoordinaten und/oder Hinweise zur Fahrstrecke umfassen.

## Claims

1. Transportation system with a non-rail-bound electrically or hybrid-electrically driven vehicle (10), with a two-pole overhead conductor system (20) disposed at least in sections along a track (L) of the vehicle (10) for the provision of electrical energy, wherein the vehicle (10) has a current collector (13) for the supply of electrical energy through sliding contact to the contact wires (21) constructed as supply and return conductors of the overhead conductor system (20) and with a video detector (17) disposed on the vehicle for the determination of a position of the contact wires (21) relative to the vehicle (10), **characterised in that** the overhead conductor system (20) has marking elements marking the position of the contact wires (21), wherein the marking elements are attached to masts (22) of the overhead conductor system (20) disposed alongside the track (L), that the video detector (17) is oriented for taking video images of the marking elements and the video detector (17) is constructed for the measurement of its distance from a marking element, and that an evaluation unit allocated to the video detector (17) is constructed to recognise from a recorded video image whether contact wires (21) are present above the vehicle (10), and when contact wires (21) are present to determine their position relative to the vehicle (10).

2. Transportation system according to claim 1, wherein the video detector (17) is constructed as a stereo camera and/or a transit-time camera.

3. Transportation system according to claim 1 or 2, wherein the video detector (17) is disposed within a driver cab (11) of the vehicle (10) and an acquisition axis (18) of the video detector (17) is oriented in the direction of travel (V) of the vehicle (10) or at an acute angle to the direction of travel.

4. Transportation system according to one of claims 1 to 3, wherein the video detector (17) has an illumination unit constructed for sending infrared light in the direction of the acquisition axis (18).

5. Transportation system according to one of claims 1 to 4, wherein the marking elements each have a retroreflective reflection surface (32) for incident light.

6. Transportation system according to one of claims 1 to 5, wherein the marking elements are made from plastic or light metal.

7. Transportation system according to one of claims 1 to 6, wherein the marking elements are disposed at a lower height than the video detector (17) and the acquisition axis (18) of the video detector (17) is inclined downwards relative to the horizontal.

8. Transportation system according to claim 1 or 2 or according to one of claims 1 to 7, provided the latter do not relate back to claim 3, wherein the acquisition axis (18) of the video detector (17) is oriented transverse to the direction of travel.

9. Transportation system according to one of claims 1 to 8, wherein each of the marking elements has an optically readable encoding area (37) for location information and the evaluation unit is constructed to read an information code represented by the encoding area (37) from a recorded video image.

10. Transportation system according to claim 9, wherein the evaluation unit is constructed to retrieve, through the use of the obtained information code, the location information from a database in or external to the vehicle.

11. Transportation system according to claim 9 or 10, wherein the location information includes a running mast number and/or geographical mast coordinates and/or information about the route.

## Revendications

1. Système de transport, comprenant un véhicule (10) non guidé sur rail et entraîné électriquement ou de manière hybride, comprenant une installation (20) de caténaire bipolaire disposée au moins par tronçon le long d'une voie (L) de circulation du véhicule (10) pour la mise à disposition d'énergie électrique, le véhicule (10) ayant un appareil (13) de prise de courant pour injecter de l'énergie électrique par contact frottant dans les fils (21) de contact, constitués en conducteur aller et conducteur retour de l'installation (20) de caténaire, et comprenant un détecteur (17) vidéo sur le véhicule pour déterminer une position relative des fils (21) de contact par rapport au véhicule (10), **caractérisé en ce que** l'installation (20) de caténaire a des éléments de repérage repérant la position des fils (21) de contact, les éléments de repérage étant fixés à des mâts (22), disposés latéralement à la voie (L) de circulation, de l'installation (20) de caténaire, **en ce que** le détecteur (17) vidéo est conçu pour prendre des images vidéo des éléments de repérage, et le détecteur (17) vidéo est constitué pour la mesure de son éloignement à un élément de repérage et **en ce qu'**une unité d'exploitation associée au détecteur (17) vidéo est constituée pour reconnaître, à partir d'une image vidéo enregistrée, si des fils (21) de contact sont présents au-dessus du véhicule (10) et si des fils (21) de contact sont présents pour déterminer leur position relative par rapport au véhicule (10).

2. Système de transport suivant la revendication 1, dans lequel le détecteur (17) vidéo est constitué en caméra vidéo et/ou en caméra à temps de vol.

3. Système de transport suivant la revendication 1 ou 2, dans lequel le détecteur (17) vidéo est disposé dans une cabine (11) de conducteur du véhicule (10) et un axe (18) de détection de détecteur (17) vidéo est dirigé dans la direction (V) de marche du véhicule (10) ou en faisant un angle aigu avec celle-ci.

4. Système de transport suivant l'une des revendications 1 à 3, dans lequel le détecteur (17) vidéo a une unité d'éclairage constituée pour envoyer de la lumière infrarouge dans la direction de l'axe (18) de détection.

5. Système de transport suivant l'une des revendications 1 à 4, dans lequel les éléments de repérage ont chacun une surface (32) de réflexion rétroréfléchissante de la lumière incidente.

6. Système de transport suivant l'une des revendications 1 à 5, dans lequel les éléments de repérage sont en matière plastique ou en métal léger.

7. Système de transport suivant l'une des revendications 1 à 6, dans lequel les éléments de repérage sont disposés à un niveau plus bas que le détecteur (17) vidéo et l'axe (18) de détection du détecteur (17) vidéo est incliné vers le bas par rapport à l'horizontal.

8. Système de transport suivant la revendication 1 ou 2 ou suivant l'une des revendications 1 à 7 dans la mesure où ces dernières ne se rapportent pas à la revendication 3, dans lequel l'axe (18) de détection du détecteur (17) vidéo est dirigé transversalement à la direction de marche.

9. Système de transport suivant l'une des revendications 1 à 8, dans lequel les éléments de repérage ont chacun une surface (37) de codage déchiffrable optiquement pour des informations de localisation et l'unité d'exploitation est constituée pour lire un code d'information représenté par la surface (37) de codage dans une image vidéo enregistrée.

10. Système de transport suivant la revendication 9, dans lequel l'unité d'exploitation est constituée pour demander les informations de localisation, au moyen du code d'information qui a été lu, dans une base de données sur le véhicule ou à l'extérieur du véhicule.

11. Système de transport suivant la revendication 9 ou 10, dans lequel les informations de localisation comprennent un numéro courant de mât et/ou des coordonnées géographiques de mât et/ou des indications sur la voie de circulation.
